# EUROPEAN PATENT APPLICATION

(11) **EP 1 312 267 A1**
(43) Date of publication of application: **21.05.2003**
(21) Application number: 01127258.0
(22) Date of filing: 16.11.2001
(51) Int. Cl.: A23K 1/14, A23K 1/16, A23K 1/18

(54) **Feed additive for livestock and the like**

(71) Applicant: Uranaka, Kazuo, Amakusa-gun, Kumamoto-ken 866-0201 (JP)
(72) Inventor: Uranaka, Kazuo, Amakusa-gun, Kumamoto-ken 866-0201 (JP)
(74) Representative: Viering, Jentschura & Partner

(57) **Abstract**

As the feed additive for the livestock of the present invention is containing a lot of ume as a main ingredient, citric acid and malic acid contained in sarcocarp of ume activate the metabolic function or the operation of citric acid cycle, whereby digestion of the feed becomes good and very bad smell of animal stall caused by excretion of undigested feed can be solved. Further, as a result of activation of the metabolic function, a body of livestock becomes strong whereby body growth and demand late for feed of the livestock, etc. are greatly improved.

## Description

### [Technical Field of the Invention]

The present invention relates to a feed additive for livestock and the like containing a lot of ume as a main ingredient in which, when it is given to livestock such as pig and cow or raised fish, their diseases are suppressed and their growing rate and raising rate can be increased while feed demanding rate can be improved whereby cost for the feed can be greatly saved.

### [Prior Art]

It has been widely carried out up to now that, in hog raising, fish raising, etc., feed is given after adding various additives thereto so that diseases are suppressed and also body growth is improved.

### [Problems that the Invention is to Solve]

However, in the conventionally used feed additives, the effect is expected only to an extent of about 70% at best even if body growth, demand for feed (amount of the feed intake), etc. are improved using, for example, bifid bacteria, oligosaccharides, antibiotics, etc. When the demand for feed is taken as an example, 330 kg in average of feed is necessary for one porker until its putting into the market. Thus the cost therefor is not negligible and, if antibiotics are used for the therapy of the disease, that will be a violation of the Drugs, Cosmetics and Medical Instruments Act and such a porker will have to be disposed. Further, in the conventional feed additives, when they are given to livestock or fish by a common method, there are some cases where the feed is excreted in an undigested state whereby bad smell is given off in the case of livestock causing a problem of environmental pollution.

### [Means for Solving Problems]

The feed additive for livestock and the like in accordance with the present invention has been achieved under the above-mentioned circumstances and it is characterized in that the first feed additive prepared by mixing and pickling 50-80% of ume as a main ingredient, 1-3% of shochu as a quality-improving agent, 18-45% of sugar and 1-4% of other additives such as vitamins (where each percentage is that by weight) for a predetermined period and the second feed additive prepared by mixing and pickling 65-85% of ume as a main ingredient and 15-35% of salt (where each percentage is that by weight) for a predetermined period are mixed in a ratio of about 1:1 and then 0.3-0.7% by weight thereof is added to a feed.

### [Function]

When the feed additive is given to livestock etc., citric acid and malic acid contained in large quantities in sarcocarp of ume activate the metabolic function or the operation of citric acid cycle and the administered feed is efficiently converted to energy whereby digestion of the feed becomes good and very bad smell of animal stall can be solved. Further, the operation of organic acid such as citric acid, malic acid, succinic acid and tartaric acid and also of triterpene such as oleanolic acid in the sarcocarp of ume is effective for various diseases of livestock and the like so that their diseased rate lowers and, at the same time, activity of livestock is improved and their body becomes strong whereby body growth and demand for feed of the livestock, etc. are greatly improved.

### [Mode for Carrying Out the Invention]

Detailed embodiments of the present invention are that the present invention relates to a feed additive for livestock and the like containing a lot of ume as a main ingredient in which, when it is given to livestock such as pig and cow or raised fish, diseases thereof is suppressed and growing rate and raising rate can be increased while feed demanding rate can be improved whereby cost for the feed can be greatly saved and that it relates to a feed additive for livestock and the like where the first feed additive prepared by mixing and pickling 50-80% of ume as a main ingredient, 1-3% of shochu as a quality-improving agent, 18-45% of sugar and 1-4% of other additives such as vitamins (where each percentage is that by weight) for a predetermined period and the second feed additive prepared by mixing and pickling 65-85% of ume as a main ingredient and 15-35% of salt (where each percentage is that by weight) for a predetermined period are mixed in a ratio of about 1 : 1 and then 0.3-0.7% by weight thereof is added to a feed.

Thus, the applicant of the present invention has improved the already-disclosed invention of the Japanese Laid-Open Patent Publication H07-79632 and, at first, the first feed additive is pickled by mixing 73% (that by weight and will be same hereinafter as well) of ume (unripe one) as a main ingredient, 1% of shochu as a quality improving agent, 24% of sugar and 2% of other additives such as vitamins.

Then the second feed additive is pickled by mixing 70% (that by weight and will be same hereinafter as well) of ume (unripe one) as a main ingredient and 30% of salt. The salt is essential for the feed additive and, when it is mixed with ume, far better result is achieved.

Under such a state, each of the first feed additive and the second additive is preserved for a predetermined period (about one month for example) so that decomposition of amygdalin which is effective for the health of livestock into prussic acid is prevented.

After that, the above first feed additive and the above second feed additive are mixed in a ratio of about 1:1, then mixed as a feed additive with the feed for livestock such as pig and cow or raised fish in an amount of 0.55% by weight and given to them about every six days whereupon the operation of organic acid such as citric acid, malic acid, succinic acid and tartaric acid and also of triterpene such as oleanolic acid in the sarcocarp of ume is effective for various diseases of livestock and the like.

Thus, citric acid and malic acid contained in large quantities in sarcocarp of ume activate the metabolic function or the operation of citric acid cycle (the cycle which takes charge of the function of metabolism by which the animal converts the food into energy) and the administered feed is efficiently converted to energy.

As a result thereof, digestion of the feed becomes good and very bad smell of animal stall can be solved as well.

The above-mentioned citric acid plays a very important role in the first stage of the said cycle and, when citric acid is in a deficient stage, operation of the said cycle become bad whereby a converting efficiency to energy lowers and lactic acid which is a cause of fatigue is excessively produced in vivo resulting in a bad affection to livestock such as onset of diseases, etc. However, when the feed additive of the present invention is given to livestock, raised fish, etc., the metabolic function of the livestock, etc. becomes quite active whereby their activity is promoted, their body becomes strong, body growth and demand for feed of livestock, etc. are greatly improved and, in addition, rate of contracting a disease significantly lowers and, although administration of antibiotics can be greatly reduced, survival rate is improved.

Thus, until now, the feed necessary for porker until putting into the market has been 330 kg in average per pig but, when the feed additive of the present invention is continuously administered to the porker, the demanding rate for the feed can be improved to an extent of 74% (about 244 kg) when the above mentioned 330 kg of feed is defined as the feed demanding rate of 100% whereby the cost for the feed can be greatly saved.

Incidentally, the growth rate of livestock is usually around 80% while, according to the feed additive of the present invention, it can be increased to an extent of about 96%.

Moreover, when the said food additive is administered to a breeding pig, it is now possible to extend the average life of the breeding pig to an extent of about two-fold and, in addition, when we asked a public organization for the measurement of the said food additive, the result was that the meat after slaughter was found to be far more durable in terms of color and freshness as compared with common meat.

Incidentally, in the above-mentioned embodiment, the first feed additive is a mixture of 73% (that by weight and will be same hereinafter as well) of ume (unripe one) as a main ingredient, 1% of shochu as a quality-improving agent, 24% of sugar and 2% of other additives such as vitamins and the ume after the pickling may be made into either grains or powder.

Further, the ume in the second feed additive prepared by mixing 60% (by weight and will be same hereinafter as well) of ume (unripe one) and 40% of salt followed by pickling may be made into either grains or powder.

### [Advantage of the Invention]

The present invention is constituted as mentioned hereinabove and, as a result of administration of the feed additive of the present invention containing a lot of ume as a main ingredient to livestock and the like, citric acid and malic acid contained in sarcocarp of ume activate the metabolic function or the operation of citric acid cycle and the administered feed is efficiently converted to energy whereby digestion of the feed becomes good and very bad smell of animal stall caused by excretion of undigested feed can be solved. Further, as a result of activation of the metabolic function, activity of livestock is improved and their body becomes strong whereby body growth and demand for feed of the livestock, etc. are greatly improved. Thus, the cost for the feed can be greatly saved and, in addition, it is believed that proliferation of miscellaneous microorganisms can be suppressed and diseased rate lowers due to the sterilizing action of ume and, although administration of antibiotics can be greatly reduced, growing rate and survival rate of livestock and the like are further improved whereby the cost can be greatly reduced. The present invention achieves such extremely useful effects.

## Claims

1. Feed additive for livestock and the like, **characterized in that**, a first feed additive prepared by mixing and pickling 50-80% of ume (Japanese apricot) as a main ingredient, 1-3% of shochu (Japanese distilled spirits) as a quality-improving agent, 18-45% of sugar and 1-4% of other additives such as vitamins (where each percentage is that by weight) for a predetermined period and a second feed additive prepared by mixing and pickling 65-85% of ume as a main ingredient and 15-35% of salt (where each percentage is that by weight) for a predetermined period are mixed in a ratio of about 1:1.

2. The feed additive of claim 1, wherein 0.3-0.7% by weight thereof are added to a feed.

3. A feed comprising the feed additive of claim 1 or 2.
